# EUROPEAN PATENT SPECIFICATION

(11) **EP 1 880 081 B1**
(45) Date of publication and mention of the grant of the patent: **06.03.2013**
(21) Application number: 06726916.7
(22) Date of filing: 26.04.2006
(51) Int. Cl.: E21B 43/27

(54) **ACIDIC TREATMENT FLUIDS COMPRISING SCLEROGLUCAN AND/OR DIUTAN AND ASSOCIATED METHODS**
SAURE BEHANDLUNGSFLÜSSIGKEITEN MIT SKLEROGLUCAN UND/ODER DIUTAN SOWIE VERFAHREN IM ZUSAMMENHANG DAMIT
LIQUIDES DE TRAITEMENT ACIDES COMPRENANT DU SCLEROGLUCANE ET/OU DU DIUTANE ET PROCEDES ASSOCIES

(30) Priority: 29.04.2005 US 118028; 29.04.2005 US 117959
(43) Date of publication of application: 23.01.2008
(73) Proprietor: Halliburton Energy Services, Inc., Duncan, OK 73533 (US)
(72) Inventor: WELTON, Thomas, D., Duncan, OK 73533 (US); PAULS, Richard, W., Duncan, OK 73533 (US); ROBB, Ian, D., Lawton. Oklahoma 73507 (US)
(74) Representative: Curtis, Philip Anthony
(86) International application number: PCT/GB2006/001531
(87) International publication number: WO 2006/117517

(56) References cited:
- FR-A- 2 570 756
- US-A- 5 555 936

## Description

### BACKGROUND

The present invention relates to acidic treatment fluids used in industrial and oil field operations, and more particularly, to acidic treatment fluids comprising gelling agents that comprise diutan, and their use in industrial and oil field operations. As used herein, the term "treatment fluid" refers to any fluid that may be used in a subterranean application in conjunction with a desired function and/or for a desired purpose. The term "treatment fluid" does not imply any particular action by the fluid or any component thereof.

Acidizing and fracturing procedures using acidic treatment fluids are commonly carried out in subterranean well formations to accomplish a number of purposes including, but not limited to, to facilitate the recovery of desirable hydrocarbons from the formation. One commonly used aqueous acidic treatment fluid comprises hydrochloric acid. Other commonly used acids for acidic treatment fluids include: hydrofluoric acid, acetic acid, formic acid, citric acid, ethylene diamine tetra acetic acid ("EDTA"), glycolic acid, sulfamic acid, and derivatives or combinations thereof.

Acidic treatment fluids are used in various subterranean operations. For example, formation acidizing or "acidizing" is a well known method for increasing the flow of desirable hydrocarbons from a subterranean formation. In a matrix acidizing procedure, an aqueous acidic treatment fluid is introduced into a subterranean formation via a well bore therein under pressure so that the acidic treatment fluid flows into the pore spaces of the formation and reacts with the acid-soluble materials therein. As a result, the pore spaces of that portion of the formation are enlarged, and consequently, the permeability of the formation should increase. The flow of hydrocarbons from the formation is therefore increased because of the increase in formation conductivity caused, inter alia, by dissolution of the formation material. In fracture acidizing procedures, one or more fractures are produced in the formations and an acidic treatment fluid is introduced into the fracture(s) to etch flow channels therein. Acidic treatment fluids also may be used to clean out well bores to facilitate the flow of desirable hydrocarbons. Other acidic treatment fluids may be used in diversion processes, and well bore clean-out processes. A specific example is filter cake removal.

To increase the viscosity of an aqueous acid treatment fluid, a suitable gelling agent may be included in the treatment fluid (often referred to as "gelling" the fluid). Gelling an aqueous acidic treatment fluid may be useful to prevent the acid from becoming prematurely spent and inactive. Additionally, gelling an aqueous acidic treatment fluid may enable the development of wider fractures so that live acid may be forced further into the formation from the well bore. Gelling the acidic treatment fluid may delay the interaction of the acid with an acid soluble component in the well bore or the formation. Moreover, gelling an aqueous acidic treatment fluid may permit better fluid loss control of the fluid.

Acidic treatment fluids used in subterranean operations are predominantly water-based fluids that comprise gelling agents that may increase their viscosities, inter alia, to provide viscosity to control the rate of spending of the acid. These gelling agents are usually biopolymers or synthetic polymers that, when hydrated and at a sufficient concentration, are capable of forming a more viscous fluid. Common gelling agents include polysaccharides (such as xanthan), synthetic polymers (such as polyacrylamide), and surfactant gel systems. Acidic treatment fluids comprising xanthan generally have sufficient viscosity for lower temperature operations. At elevated temperatures (e.g., those above about 48.9 °C, 120 °F to about 65.5 °C, 150 °F), however, the viscosity of such xanthan treatment fluids are diminished. Consequently, xanthan may not be a suitable gelling agent for acidic treatment fluids when those fluids are used in well bores that comprise elevated temperatures. Other gelling agents such as synthetic gelling agents (e.g., polyacrylamides) have been used, but they are often difficult to disperse and usually require considerable mixing or agitation to develop full viscosity. Additionally, most conventional gelling agents, including guar and some synthetic polymers, may form acid insoluble residues. Moreover, surfactant gel systems can be expensive, and are often sensitive to impurities. Also, surfactant gel systems often require hydrocarbon breakers.

### SUMMARY OF THE INVENTION

The present invention relates to acidic treatment fluids used in industrial and oil field operations, and more particularly, to acidic treatment fluids comprising gelling agents that comprise diutan, and their use in industrial and oil field operations.

In one embodiment, the present invention provides a method comprising: providing an acidic treatment fluid that comprises a gelling agent that comprises an aqueous base fluid, an acid, and a gelling agent that comprises diutan; and introducing the acidic treatment fluid into a subterranean formation.

In another embodiment, the present invention provides a method of acidizing a portion of a subterranean formation comprising: providing an acidic treatment fluid that comprises a gelling agent that comprises an aqueous base fluid, an acid, and a gelling agent that comprises diutan; contacting a portion of the subterranean formation with the acidic treatment fluid; and allowing the acidic treatment fluid to interact with a component of the subterranean formation so that the component is dissolved.

In another embodiment, the present invention provides a method of producing hydrocarbons from a subterranean formation that comprises: introducing an acidic treatment fluid comprising an aqueous base fluid, an acid, and a gelling agent that comprises diutan into the subterranean formation; and producing hydrocarbons from the formation.

In another embodiment, the present invention provides a subterranean well treatment system comprising an acidic treatment fluid that comprises an aqueous base fluid, an acid, and a gelling agent that comprising diutan.

In another embodiment, the present invention provides an acidic treatment fluid comprising a gelling agent that comprises diutan.

The features and advantages of the present invention will be readily apparent to those skilled in the art upon a reading of the description of the preferred embodiments that follows.

### BRIEF DESCRIPTION OF THE DRAWINGS

These drawings illustrate certain aspects of some of the embodiments of the present invention, and should not be used to limit or define the invention.
Figure 1 illustrates viscosity data from an experiment involving an embodiment of the present invention.
Figure 2 illustrates the viscosity data from an experiment involving an embodiment of the present invention.

### DESCRIPTION OF PREFERRED EMBODIMENTS

The present invention relates to acidic treatment fluids used in industrial and oil field operations, and more particularly, to acidic treatment fluids comprising gelling agents that comprise diutan, and their use in industrial and oil field operations. Such operations may involve the removal of scale, fracture acidizing, matrix acidizing, diversion, filter cake removal, or pill removal.

In certain embodiments, the present invention provides fluids and methods that are especially suitable for use in well bores comprising a borehole temperature ("BHT") of up to about 260 °C (500 °F). A preferred temperature range is a treating temperature below about 121 °C (250 °F). One should note that the ability of the acidic treatment fluids of the present invention to maintain a degree of viscosity at such elevated temperatures may be affected by the time a particular fluid is exposed to such temperatures. For example, in some fracture acidizing applications, there may be a considerable fracture cool-down, which may enable utilization of an acidic treatment fluid of the present invention at BHT above the temperature limit at which the fluid demonstrates viscosity. One of the many advantages of the gelling agents of the present invention is that they typically do not leave undesirable residues in the formation once the fluid has been broken. Another advantage is that the gelling agents are environmentally acceptable in some sensitive environments (such as the North Sea). Additionally, the gelling agents of the present invention may present a cost savings over some conventional gelling agents (like many surfactant-based gelling agents) for acidic treatment fluid applications. The acidic treatment fluids of the present invention may be useful in a wide variety of subterranean treatment operations in which acidic treatment fluids may be suitable.

The acidic treatment fluids of the present invention generally comprise an aqueous base fluid, an acid, and a gelling agent of the present invention that comprises diutan. When used in diversion applications, a treatment fluid may or may not comprise an acid. One of ordinary skill in the art with the benefit of this disclosure will be able to determine whether an acid is appropriate. The fluids of the present invention have a pH of less than about 4. In preferred embodiments comprising hydrochloric acid, the treatment fluids may have a pH of about 1 or less. In embodiments comprising an organic acid, the treatment fluids may have a pH of about 1 to about 4.

The aqueous base fluids of the treatment fluids of the present invention generally comprise fresh water, salt water, or a brine (e.g., a saturated salt water). Other water sources may be used, including those comprising divalent or trivalent cations, e.g., magnesium, calcium, zinc, or iron. Monovalent brines are preferred and, where used, may be of any weight One skilled in the art will readily recognize that an aqueous base fluid containing a high level of multi-valent ions should be tested for compatibility prior to use. Salts optionally may be added to the water source, inter alia, to produce a treatment fluid having a desired density or other characteristics. One of ordinary skill in the art with the benefit of this disclosure will recognize the particular type of salt appropriate for particular application, given considerations such as protection of the formation, the presence or absence of reactive clays in the formation adjacent to the well bore, compatibility with the other acidic treatment fluid additives, and the factors affecting wellhead control. A wide variety of salts may be suitable. Examples of suitable salts include, inter alia, potassium chloride, sodium bromide, ammonium chloride, cesium formate, potassium formate, sodium formate, sodium nitrate, calcium bromide, zinc bromide, and sodium chloride. A preferred aqueous base fluid is a 5% ammonium chloride brine with hydrofluoric acid or an organic acid. An artisan of ordinary skill with the benefit of this disclosure will recognize the appropriate concentration of a particular salt to achieve a desired density given factors such as the environmental regulations that may pertain. Also, the composition of the water used also will dictate whether and what type of salt is appropriate. The amount of the base fluid in an acidic treatment fluid of the present invention will vary depending on the purpose of the fluid, the formation characteristics, and whether the fluid will be foamed.

Suitable acids for inclusion in the treatment fluids of the present invention include any acid suitable for use in a subterranean application. Examples include hydrochloric acid, hydrofluoric acid, acetic acid, formic acid, citric acid, ethylene diamine tetra acetic acid ("EDTA"), glycolic acid, sulfamic acid, and derivatives or a combination thereof. Hydrochloric acid, acetic acid, or formic acid may be preferred in certain applications. One should note that the choice of aqueous base fluid and acid should be chosen vis-à-vis the other so that the proper synergistic effect is achieved. The concentration and type of acid selected may be based upon the function of the acid (e.g., scale removal, fracture acidizing, matrix acidizing, removal of fluid loss filter cakes and pills, and the like) and the mineralogy of the formation. It is well known that certain concentrations of acids will form precipitates upon spending. See Gdanski, R.D.: "Kinetics of the Tertiary Reaction of HF on AluminoSilicates", SPE 31076 presented at the SPE Formation Damage Symposium, Lafayette, LA, February 14-15, 1996. Such tendency to form precipitates should be taken into consideration when choosing an acid. A precipitation control additive (e.g., aluminum chloride) may be desirable to include as well depending on the acid and the formation.

The gelling agents of the present invention comprise diutan. The gelling agent may be present in an acidic treatment fluid of the present invention in an amount of from about 1.2 kg/m³ (10 lb/Mgal) to about 24 kg/m³ (200 lb/Mgal). Generally speaking, an acidic treatment fluid containing an organic acid may require less of a gelling agent of the present invention than an acidic treatment fluid containing hydrochloric acid.

As noted in the text Biopolymers, Volume 6, Polysaccharides II: Polysaccharides from Eukaryotes, by E. J. Vandamme (Editor), S. De Baets (Editor), Alexander Steinbüchel (Editor), ISBN: 3-527-30227-1; published by Wiley 2002, specifically Chapters 2 and 3, scleroglucan is a neutral fungal polysaccharide. Scleroglucan is a hydrophilic polymer, which is believed to have a tendency to thicken and stabilize water-based systems by conferring on them a relatively high viscosity, generally higher than that obtained in the case of xanthan, for example, at temperatures at or above about 93.3 °C (200 °F), for identical concentrations of active compounds. Scleroglucan also appears to be more resistant to pH and temperature changes than xanthan, and therefore, may impart more stable viscosity in such conditions. In certain aspects, the viscosity of a scleroglucan fluid may be virtually independent of pH between a pH of about 1 and about 12.5 up to a temperature limit of about 132 °C (270 °F). Generally, the main backbone polymer chain of scleroglucan comprises (1→3)ß-D-glucopyranosyl units with a single ß-D-glucopyranosyl group attached to every third unit on the backbone. Scleroglucan is thought to be resistant to degradation, even at high temperatures such as those at or above about 93.3 °C (200 °F), even after, e.g., 500 days in seawater. Viscosity data (see Table 1 and Table 2) show that dilute solutions (e.g., about 0.5%) may be shear thinning and stable to at least 121 °C (250 °F). Note that these solutions are not acidic. These viscosities illustrate, inter alia, scleroglucan's suitability for viscosifying fluids. A gelling agent comprising scleroglucan, may include about 1.2 kg/m³ (10 lb/Mgal) to about 24 kg/m³ (200 lb/Mgal) scleroglucan. In an acidic treatment fluid that comprises hydrochloric acid, a more preferred range may be from about 4.8 kg/m³ (40 lb/Mgal) to about 14.4 kg/m³ (120 lb/Mgal) of scleroglucan.

**Comparative Table 1**

| **Viscosities (cP) of 1% Scleroglucan, Measured at Various Temperatures (°C) and Shear Rates (s⁻¹), using a Brookfield PVS Rheometer** | | | | | | |
|---|---|---|---|---|---|---|
| **Shear Rate (s⁻¹)** | **70°C** | **80°C** | **99°C** | **108°C** | **118°C** | **127°C** |
| 8.5 | 1500 | 1450 | 1480 | 1460 | 1330 | 1540 |
| 25 | 520 | 540 | 540 | 550 | 500 | -- |
| 85 | 180 | 180 | 178 | 175 | 165 | -- |
| 170 | 100 | 98 | 99 | 93 | 92 | -- |

**Comparative Table 2**

| **Elastic Moduli G' (Pa) Measured Using a Haake RS 150 Controlled Stress Rheometer at 25°C; Measurements Made at 1 Hz in the Linear Viscoelastic Region.** | | |
|---|---|---|
| | **Xanthan** | **Scleroglucan** |
| 1.0% | 38 | 35 |
| 0.5% | 9 | 13 |

As noted in the text Biopolymers, Volume 6, Polysaccharides II: Polysaccharides from Eukaryotes, by E. J. Vandamme (Editor), S. De Baets (Editor), Alexander Steinbüchel (Editor), ISBN: 3-527-30227-1; published by Wiley 2002, specifically Chapters 2 and 3, and Biopolymers; (1999) vol 50; p.496; Authors: B.H.Falch; A.Elgsaeter & B.T.Stokke, diutan gum is a polysaccharide designated as "S-657," which is prepared by fermentation of a strain of sphingomonas. Diutan's structure has been elucidated as a hexasaccharide having a tetrasaccharide repeat unit in the backbone that comprises glucose and rhamnose units and dirhamnose side chain. It is believed to have thickening, suspending, and stabilizing properties in aqueous solutions. Diutan is composed principally of carbohydrates, about 12% protein, and about 7% (calculated as O-acetyl) acyl groups, the carbohydrate portion containing about 19% glucuronic acid, and the neutral sugars rhamnose and glucose in the approximate molar ratio of about 2:1. Details of the diutan gum structure may be found in an article by Diltz et al., "Location of O-acetyl Groups in S-657 Using the Reductive-Cleavage Method," Carbohydrate Research, Vol. 331, p. 265-270 (2001), which is hereby incorporated by reference in its entirety. Details of preparing diutan gum may be found in U.S. Pat. No. 5,175,278, which is hereby incorporated by reference in its entirety. A suitable source of diutan is "GEOVIS XT," which is commercially available from Kelco Oil Field Group, Houston, Texas. The elastic moduli of some diutan solutions as compared to xanthan solutions are shown in Table 3. Note that these are not acidic solutions. The gelling agent of the present invention may include about 1.2 kg/m³ (10 lb/Mgal) to about 24 kg/m³ (200 lb/Mgal) of diutan. In an acidic treatment fluid that comprises about 15% hydrochloric acid, a more preferred range may be from about 12 kg/m³ (100 lb/Mgal) to about 24 kg/m³ (200 lb/Mgal) of diutan.

**Table 3**

| **Elastic Moduli (G') of Diutan and Xanthan Solutions** | |
|---|---|
| **Solution Composition** | **G'(Pa)** |
| 0.5% Diutan in water | 15.0 |
| 0.5% Xanthan in water | 11.8 |
| 0.5% Diutan in 6% NaCl | 19.0 |
| 0.5% Xanthan in 6% NaCl | 12.8 |
| 0.75% Diutan in water | 33.0 |
| 0.75% Diutan in 20% KCl | 29.0 |

In some embodiments, the gelling agents may be at least partially crosslinked through a crosslinking reaction comprising a suitable crosslinking agent. Suitable crosslinking agents include zirconium-based crosslinking agents, chrome-based crosslinking agents, and iron-based crosslinking agents. Crosslinking the gelling agent may be desirable where it is desirable to make a certain acidic treatment fluid more viscous. One of ordinary skill in the art with the benefit of this disclosure will recognize when such crosslinkers are appropriate and what particular crosslinker will be most suitable. Things to take into consideration when choosing a suitable crosslinking agent include the pH range of the fluid, activity of the crosslinking agent, the desired viscosity of the treatment fluid, the temperature sensitivity of the crosslinking agent, and the sheer sensitivity of the fluid in the environment. It should be noted that suitable viscosities could be obtained for acidic treatment fluids that comprise gelling agents that comprise diutan without using crosslinkers. Typically, a crosslinking agent may be included in an amount of from about 0.0012 kg/m³ (0.01 lb/Mgal) to about 1.8 kg/m³ (15 lb/Mgal).

Typical cross-linking agents are transitional metals and/or transition metal complexes such as iron, titanium, chromium and zirconium including reaction products of organic acids including polyfunctional acids including dicarboxylic acids, hydroxy-carboxylic acids, amine-carboxylic acids (including for example acetic acid, oxalic acid, malonic acid, succinic acid, glutaric acid, adipic acid, pimelic acid, suberic acid, azelaic acid, sebacic acid, maleic acid, fumaric acid, lactic acid, aspartic acid, malic acid, mandelic acid, citric acid, and the like). Particularly useful are the hydroxy-carboxylic acids such as lactic, maleic and citric acids. Also useful are the complexes formed with these compounds and ammonia alkyli metals, including methyl amine, propyl amine, diethylamine, triethylene tetramine, isopropyl amine, and the like; and hydroxyl amines such as triethanolamine, diethanol amine, and the like. Typical compounds include ferric chloride, titanium lactate, titanium malate, titanium citrate, zirconium lactate, zirconium oxychloride, zirconium hydroxychloride, zirconium citrate, zirconium complex of hydroxyethyl glycine, ammonium zirconium fluoride, zirconium 2-ethylhexanoate, zirconium acetate, zirconium neodecanoate, zirconium acetylacetonate, tetrakis(triethanolamine)zirconate, zirconium carbonate, ammonium zirconium carbonate, zirconyl ammonium carbonate, zirconium lactate, titanium acetylacetonate, titanium ethylacetoacetate, titanium citrate, titanium triethanolamine, ammonium titanium lactate, aluminum citrate, chromium citrate, chromium acetate, chromium propionate, chromium malonate, zirconium malate, ammonium, sodium zirconium lactate, zirconium lactate in combination with isopropylamine or triethanolamine, mixtures thereof and the like. Also useful is the use of crosslinking retarders include tartaric acid, sodium glucoheptonate, glucono-delta lactone, sodium lignosulfonate, combinations there of, and the like.

In certain embodiments, the acidic treatment fluids of the present invention also may comprise suitable: hydrate inhibitor, corrosion inhibitors, pH control additives, surfactants, breakers, fluid loss control additives, scale inhibitors, asphaltene inhibitors, paraffin inhibitors, salts, foamers, defoamers, emulsifiers, demulsifiers, iron control agents, solvents, mutual solvents, particulate diverters, gas phase, carbon dioxide, nitrogen, other biopolymers, synthetic polymers, friction reducers combinations thereof, or the like. The acidic treatment fluids of the present invention also may include other additives that may be suitable for a given application.

In alternative embodiments, the acidic treatment fluids of the present invention may be foamed. In such embodiments, the acidic treatment fluids also comprise a gas, and a foaming agent. While various gases can be utilized for foaming the acidic treatment fluids of this invention, nitrogen, carbon dioxide, and mixtures thereof are preferred. In examples of such embodiments, the gas may be present in an acidic treatment fluid in an amount in the range of from about 5% to about 95% by volume of the treatment fluid, and more preferably in the range of from about 20% to about 80%. The amount of gas to incorporate into the fluid may be affected by factors including the viscosity of the fluid and wellhead pressures involved in a particular application. Examples of preferred foaming agents that can be utilized to foam and stabilize the acidic treatment fluids of this invention include, but are not limited to, alkylamidobetaines such as cocoamidopropyl betaine, alpha-olefin sulfonate, trimethyltallowammonium chloride, C8 to C22 alkylethoxylate sulfate and trimethylcocoammonium chloride. Cocoamidopropyl betaine is especially preferred. Other suitable surfactants available from Halliburton Energy Services include: "19N," "G-Sperse Dispersant," "Morflo III®" surfactant, "Hyflo (R) IV M" surfactant, "Pen-88Mtm" surfactant, "HC-2 Agent," "Pen-88 HTtm" surfactant, "SEM-7 tm" emulsifier, "Howco-Suds tm" foaming agent, "Howco Sticks tm" surfactant, "A-Sperse tm" Dispersing aid for acid additives, "SSO-21E" surfactant, and "SSO-21MW tm" surfactant. Other suitable foaming agents and foam stabilizing agents may be included as well, which will be known to those skilled in the art with the benefit of this disclosure. The foaming agent is generally present in an acidic treatment fluid of the present invention in an amount in the range of from about 0.1 % to about 2.0% by weight, more preferably in the amount of from about 0.2% to about 1.0% and most preferably about 0.6%.

Examples of suitable corrosion inhibitors include acetylenic alcohols, Mannich condensation products (such as those formed by reacting an aldehyde, a carbonyl containing compound and a nitrogen containing compound), unsaturated carbonyl compounds, unsaturated ether compounds, formamide, formic acid, formates, other sources of carbonyl, iodides, terpenes, and aromatic hydrocarbons, coffee, tobacco, gelatin, cinnamaldehyde, cinnamaldehyde derivatives, acetylenic alcohols, fluorinated surfactants, quaternary derivatives of heterocyclic nitrogen bases, quaternary derivatives of halomethylated aromatic compounds, formamides, combinations of such compounds used in conjunction with iodine; quaternary ammonium compounds; and combinations thereof. Suitable corrosion inhibitors and intensifiers are available from Halliburton Energy Services and include : "MSA-IITM" corrosion inhibitor, "MSA-III" corrosion inhibitor, "HAI-25 E+" environmentally friendly low temp corrosion inhibitor, "HAI-404™" acid corrosion inhibitor, "HAI-50™" Inhibitor, "HAI-60 ™" Corrosion inhibitor, "HAI-62™" acid corrosion inhibitor, "HAI-65™" Corrosion inhibitor, "HAI-72E+™" Corrosion inhibitor, "HAI-75™" High temperature acid inhibitor, "HAI-81M™" Acid corrosion inhibitor, "HAI-85™" Acid corrosion inhibitor, "HAI-85M™" Acid corrosion inhibitor, "HAI-202 Environmental Corrosion Inhibitor," "HAI-OS" Corrosion Inhibitor, "HAI-GE" Corrosion Inhibitor, "FDP-S692-03" Corrosion inhibitor for organic acids, "FDP-S656AM-02" and "FDP-S656BW-02" Environmental Corrosion Inhibitor System, "HII-500" Corrosion inhibitor intensifier, "HII-500M" Corrosion inhibitor intensifier, "HII-124" Acid inhibitor intensifier, "HII-124B" Acid inhibitor intensifier, "HII-124C™" Inhibitor intensifier, and "HII-124F™" corrosion inhibitor intensifier. Suitable iron control agents are available from Halliburton Energy Services and include: "Fe-2™" Iron sequestering agent, "FE-2A™" Buffering agent, "FE-3™" Iron control agent, "FE-3A™" Iron control agent, "FE-4™" Iron control agent, "FE-5™" Iron control agent, "FE-5A™" Iron control agent, "FERCHEK®" Ferric iron inhibitor, "FERCHEK® A "Reducing agent, and "FERCHEK® SC" Iron control process or system. Other suitable iron control agents include those described in United States Patent Nos. 6,315,045, 6,525,011, 6,534,448, and 6,706,668. Examples of corrosion inhibitor activators that may be included include, but are not limited to, cuprous iodide; cuprous chloride; antimony compounds such as antimony oxides, antimony halides, antimony tartrate, antimony citrate, alkali metal salts of antimony tartrate and antimony citrate, alkali metal salts of pyroantimonate and antimony adducts of ethylene glycol; bismuth compounds such as bismuth oxides, bismuth halides, bismuth tartrate, bismuth citrate, alkali metal salts of bismuth tartrate and bismuth citrate; iodine; iodide compounds; formic acid; and mixtures of the foregoing activators such as a mixture of formic acid and potassium iodide. The amount of any corrosion inhibitor to include in an acidic treatment fluid of the present invention will depend on many factors, including but not limited to, the metallurgy the acid will contact, contact time, temperature, etc. Generally, the amount of a corrosion inhibitor to include will range from about 0.1% to about 3% by volume.

Suitable pH control additives, in certain embodiments, may comprise bases, chelating agents, acids, or combinations of chelating agents and acids or bases. A pH control additive may be necessary to maintain the pH of the treatment fluid at a desired level, e.g., to improve the dispersion of the gelling agent in the aqueous base fluid. In some instances, it may be beneficial to maintain the below 3. Suitable pH control additives are those additives that assist in maintaining the pH of an acidic treatment fluid very low, and may include glycolic acids, acetic acids, lactone derivatives, formic acid, carbonic acid, sulfamic acid, and the like.

In some embodiments, the acidic treatment fluids of the present invention may include surfactants, e.g., to improve the compatibility of the acidic treatment fluids with other fluids (like any formation fluids) that may be present in the well bore. Examples of suitable surfactants include ethoxylated nonyl phenol phosphate esters, nonionic surfactants, cationic surfactants, anionic surfactants, amphoteric surfactants, alkyl phosphonate surfactants, linear alcohols, nonylphenol compounds, alkyoxylated fatty acids, alkylphenol alkoxylates, ethoxylated amides, ethoxylated alkyl amines, amphoteric surfactants (such as betaines), and mixtures thereof. Suitable surfactants may be used in a liquid or powder form. In an embodiment where liquid surfactants are used, the surfactants are generally present in an amount in the range of from about 0.01% to about 5.0% by volume of the acidic treatment fluid. In one embodiment, the liquid surfactants are present in an amount in the range of from about 0.1 % to about 2.0% by volume of the acidic treatment fluid. In embodiments where powdered surfactants are used, the surfactants may be present in an amount in the range of from about 0.001 % to about 0.5% by weight of the acidic treatment fluid. Examples of suitable surfactants are non-emulsifiers commercially available from Halliburton Energy Services, Inc., of Duncan, Oklahoma, under the tradenames "LOSURF-259™" solid surfactant, "LOSURF-300™" nonionic surfactant, "LOSURF-357™" nonionic surfactant, and "LOSURF-400™," surfactant, "LOSURF-2000STM" solid surfactant, and "LOSURF-2000M" solid surfactant, "LOSURF-357" nonionic surfactant, "LOSURF-400" surfactant, "LOSURF-2000S" surfactant, "LOSURF-259" nonionic non-emulsifier, and "LOSURF-300" nonionic surfactant. Another example of a suitable surfactant is a non-emulsifier commercially available from Halliburton Energy Services, Inc., of Duncan, Oklahoma, under the tradename "NEA-96M™" Surfactant. Other examples of suitable surfactants that are commercially available from Halliburton Energy Services in Duncan, Oklahoma are tradenamed products "SGA-1," "EFS-1," "EFS-2," "EFS-3," and "EFS-4."

While typically not required, the acidic treatment fluids of the present invention also may comprise breakers capable of reducing the viscosity of the acidic treatment fluid at a desired time. Examples of such suitable breakers for acidic treatment fluids of the present invention include, but are not limited to, sodium chlorite, hypochlorite, perborate, persulfates, peroxides, including organic peroxides. Other suitable breakers include suitable acids. Preferred examples of suitable breakers for acidic treatment fluids of the present invention that include a gelling agent that comprises diutan include peroxide breakers. Preferred examples include tert-butyl hydroperoxide and tert-amyl hydroperoxide. Sodium persulfate and sodium chlorite are not preferred breakers for acidic treatment fluids of the present invention that include a gelling agent that comprises diutan because optimal degradation generally may not occur within a desirable time period. A breaker may be included in an acidic treatment fluid of the present invention in an amount and form sufficient to achieve the desired viscosity reduction at a desired time. The breaker may be formulated to provide a delayed break, if desired. For example, a suitable breaker may be encapsulated if desired. Suitable encapsulation methods are known to those skilled in the art. One suitable encapsulation method that may be used involves coating the chosen breakers with a material that will degrade when downhole so as to release the breaker when desired. Resins that may be suitable include, but are not limited to, polymeric materials that will degrade when downhole. The terms "degrade," "degradation," or "degradable" refer to both the two relatively extreme cases of hydrolytic degradation that the degradable material may undergo, i.e., heterogeneous (or bulk erosion) and homogeneous (or surface erosion), and any stage of degradation in between these two. This degradation can be a result of, inter alia, a chemical or thermal reaction or a reaction induced by radiation. Suitable examples of materials that can undergo such degradation include polysaccharides such as dextran or cellulose; chitins; chitosans; proteins; aliphatic polyesters; poly(lactides); poly(glycolides); poly(ε-caprolactones); poly(hydroxybutyrates); poly(anhydrides); aliphatic polycarbonates; orthoesters, poly(orthoesters); poly(amino acids); poly(ethylene oxides); and polyphosphazenes. If used, a breaker should be included in a composition of the present invention in an amount sufficient to facilitate the desired reduction in viscosity in a viscosifier treatment fluid. For instance, peroxide concentrations that may be used vary from about 0.0004 m³ (0.1 gallons) to about 0.04 m³ (10 gallons) of peroxide per 4 m³ (1000 gallons) of the acidic treatment fluid. Optionally, the acidic treatment fluid may contain an activator or a retarder, inter alia, to optimize the break rate provided by the breaker.

To facilitate a better understanding of the present invention, the following examples of certain aspects of some embodiments are given. In no way should the following examples be read to limit, or define, the scope of the invention.

### EXAMPLES

Fluid preparation: Comparative acidic treatment fluids comprising scleroglucan were prepared by making a 15% HCl fluid containing 10.0 kg/m³ (83.5 lb/Mgal) of scleroglucan in a Waring blender. The fluid was mixed (hydrated) for 30 minutes. Acidic treatment fluids comprising a diutan gelling agent and a xanthan gelling agent were prepared in a similar manner using 19.76 kg/m³ (164.9 lb/Mgal) and 10.0 kg/m³ (83.5 lb/Mgal), respectively. A comparative xanthan fluid was prepared using the same process.

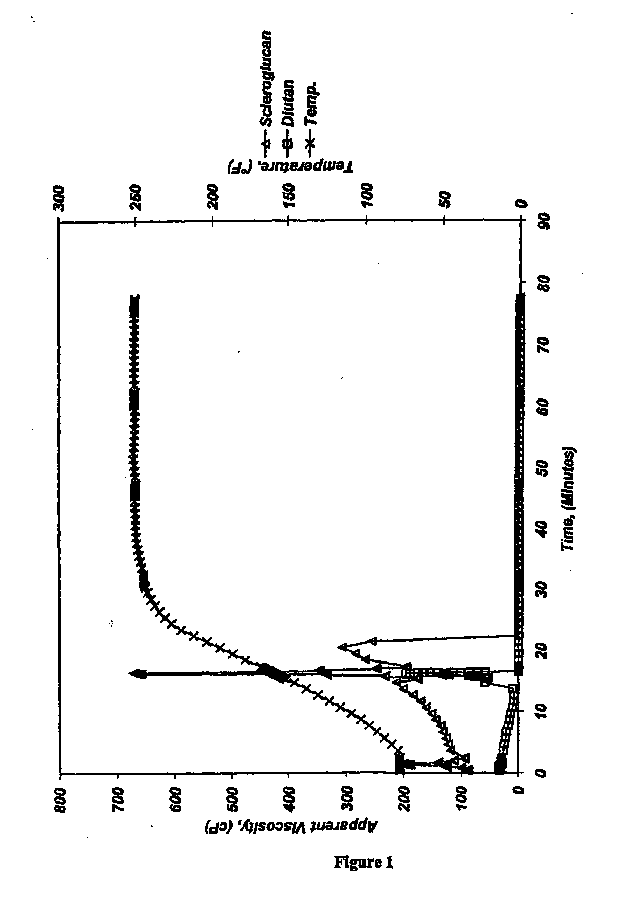

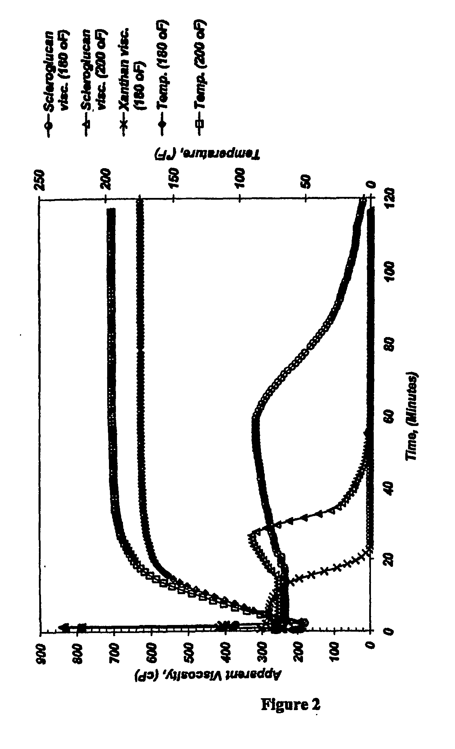

Fluid evaluation: The fluids were then evaluated under two different temperature profiles on a Nordman Model 50 viscometer using a modified API2 test. The results are shown in Figure 1 and Figure 2. In Figure 1, the apparent viscosity is given on the major Y-axis and the sample temperature is given on the minor Y-axis. Figure 1 demonstrates that fluids comprising a gelling agent that comprises scleroglucan or diutan can maintain higher viscosities at higher temperatures than a fluid comprising a gelling agent that comprises xanthan. Similarly, Figure 2 demonstrates that a fluid comprising a gelling agent that comprises scleroglucan has a higher viscosity than a fluid that comprises a gelling agent that comprises xanthan.

Therefore, the present invention is well adapted to attain the ends and advantages mentioned as well as those that are inherent therein. While numerous changes may be made by those skilled in the art, such changes are encompassed within the scope of this invention as defined by the appended claims. The terms in the claims have their plain, ordinary meaning unless otherwise explicitly and clearly defined by the patentee.

## Claims

1. A method comprising:
providing an acidic treatment fluid that comprises a gelling agent that comprises an aqueous base fluid, an acid, and a gelling agent that comprises diutan; and
introducing the acidic treatment fluid into a subterranean formation.

2. The method of claim 1, wherein the subterranean formation comprises a borehole temperature of up to about 260 °C (500 °F).

3. The method of claim 1, wherein the pH of the acidic treatment fluid is less than about 4.

4. The method of claim 1, wherein the acidic treatment fluid comprises at least one of the following: fresh water; salt water; a brine; a salt; potassium chloride; sodium bromide; ammonium chloride; cesium formate; potassium formate; sodium formate; sodium nitrate; calcium bromide; zinc bromide; sodium chloride; hydrochloric acid; hydrofluoric acid; acetic acid; formic acid; citric acid; ethylene diamine tetra acetic acid; glycolic acid; or sulfamic acid.

5. The method of claim 1, wherein the acidic treatment fluid is introduced into the formation in an operation involving the removal of scale, fracture acidizing, matrix acidizing, diversion, filter cake removal, or pill removal.

6. The method of claim 1, wherein the gelling agent is present in the acidic treatment fluid in an amount offrom 1.2 kg/m³ (10 lb/Mgal) to 24 kg/m³ (200 lb/Mgal).

7. The method of claim 1, wherein the gelling agent is at least partially crosslinked through a crosslinking reaction that comprises a crosslinking agent.

8. The method of claim 1, wherein the acidic treatment fluid comprises at least one of the following: a hydrate inhibitor; a corrosion inhibitor; a pH control additive; a surfactant; a breaker; a fluid loss control additive; a scale inhibitor; an asphaltene inhibitor; a paraffin inhibitor; a foaming agent; a defoamer; an emulsifier; a demulsifier; an iron control agent; a solvent; a mutual solvent; a particulate diverter; a gas; carbon dioxide; nitrogen; a biopolymer other than scleroglucan or diutan; a synthetic polymer; or a friction reducer.

9. The method of claim 1, wherein the acidic treatment fluid is foamed and comprises a gas in the amount of from 5% to 95% by volume.

10. A method according to any one of claims 1, 4, 6 or 8, comprising contacting a portion of the subterranean formation with the acidic treatment fluid; and allowing the acidic treatment fluid to interact with a component of the subterranean formation so that the component is dissolved.

11. The method of claim 10, wherein the acid comprises hydrochloric acid.

12. A method according to any one of claims 1, 2, 3, 4 or 8, further comprising: producing hydrocarbons from the formation.

13. The method of claim 10. wherein the acidic treatment fluid is foamed.

14. A treatment fluid comprising a gelling agent that comprises diutan, wherein the pH of the acidic treatment fluid is less than about 4.

15. A treatment fluid according to claim 14, wherein the acidic treatment fluid comprises at least one of the following: fresh water; salt water; a brine; a salt; potassium chloride; sodium bromide; ammonium chloride; cesium formate; potassium formate; sodium formate; sodium nitrate; calcium bromide; zinc bromide; sodium chloride; hydrochloric acid; hydrofluoric acid; acetic acid; formic acid; citric acid; ethylene diamine tetra acetic acid; glycolic acid; or sulfamic acid.

16. A treatment fluid according to claim 14, wherein the gelling agent is present in the acidic treatment fluid in an amount of from 1.2 kg/m³ (10 lb/Mgal) to 24 kg/m³ (200 lb/Mgal).

17. A treatment fluid according to claim 14, wherein the gelling agent is at least partially crosslinked through a crosslinking reaction that comprises a crosslinking agent.

18. A treatment fluid according to claim 14, wherein the crosslinking agent comprises at least one of the following: a iron-based compound; a titanium-based compound; a zirconium-based compound; ferric chloride; titanium lactate; titanium malate; titanium citrate; zirconium lactate; zirconium oxychloride; zirconium hydroxychloride; zirconium citrate; a zirconium complex of hydroxyethyl glycine; ammonium zirconium fluoride; zirconium 2-ethylhexanoate; zirconium acetate; zirconium neodecanoate; zirconium acetylacetonate; tetrakis(triethanolamine)zirconate; zirconium carbonate; ammonium zirconium carbonate; zirconyl ammonium carbonate; zirconium lactate; titanium acetylacetonate; titanium ethylacetoacetate; titanium citrate; titanium triethanolamine; ammonium titanium lactate; aluminum citrate; chromium citrate; chromium acetate; chromium propionate; chromium malonate; zirconium malate; ammonium; sodium zirconium lactate; or zirconium lactate in combination with isopropylamine or triethanol amine.

19. A treatment fluid according to claim 14, wherein the acidic treatment fluid comprises at least one of the following: a hydrate inhibitor; a corrosion inhibitor; a pH control additive; a surfactant; a breaker; a fluid loss control additive; a scale inhibitor; an asphaltene inhibitor; a paraffin inhibitor; a foaming agent; a defoamer; an emulsifier; a demulsifier; an iron control agent; a solvent; a mutual solvent; a particulate diverter; a gas; carbon dioxide; nitrogen; a biopolymer other than scleroglucan or diutan; a synthetic polymer; or a friction reducer.

20. A treatment fluid according to claim 14, wherein the acidic treatment fluid comprises a gas in the amount of from 5% to 95% by volume.

21. A treatment fluid according to claim 20, wherein the acidic treatment fluid comprises at least one of the following: an alkylamidobetaine; cocoamidopropyl betaine; alpha-olefin sulfonate; trimethyltallowammonium chloride; a C₈ to C₂₂ alkylethoxylate sulfate; or trimethylcocoammonium chloride.

22. A treatment fluid according to claim 14, wherein the acidic treatment fluid comprises a corrosion inhibitor that comprises at least one of the following: an acetylenic alcohol; a Mannich condensation product; an unsaturated carbonyl compound; an unsaturated ether compound; formamide; formic acid; a formate; a carbonyl; an iodide; a terpene; an aromatic hydrocarbon; coffee; tobacco; gelatin; cinnamaldehyde; a cinnamaldehyde derivative; an acetylenic alcohol; a fluorinated surfactant; a quaternary derivative of heterocyclic nitrogen base; a quaternary derivative of a halomethylated aromatic compound; cuprous iodide; cuprous chloride; an antimony compound; an antimony oxide; an antimony halide; antimony tartrate; antimony citrate; an alkali metal salt of an antimony tartrate and antimony citrate; an alkali metal salt of pyroantimonate and an antimony adduct of ethylene glycol; a bismuth compound; a bismuth oxide; a bismuth halide; a bismuth tartrate; a bismuth citrate; an alkali metal salts of bismuth tartrate and bismuth citrate; or iodine.

23. A subterranean well treatment system comprising an acidic treatment fluid that comprises an aqueous base fluid, an acid, and a gelling agent, wherein the gelling agent comprises a well treatment fluid according to any one of claims 14 to 21.

## Patentansprüche

1. Verfahren, das Folgendes umfasst:
Bereitstellen einer sauren Behandlungsflüssigkeit, die ein Geliermittel umfasst, das eine wässrige Basisflüssigkeit, eine Säure und ein Geliermittel, das Diutan umfasst, umfasst; und
Einbringen der sauren Behandlungsflüssigkeit in eine unterirdische Formation.

2. Verfahren nach Anspruch 1, wobei die unterirdische Formation eine Bohrlochtemperatur von bis zu etwa 260 °C (500 °F) umfasst.

3. Verfahren nach Anspruch 1, wobei der pH-Wert der sauren Behandlungsflüssigkeit weniger als etwa 4 ist.

4. Verfahren nach Anspruch 1, wobei die saure Behandlungsflüssigkeit mindestens einen der folgenden Bestandteile umfasst: Süßwasser; Salzwasser; eine Salzlösung; ein Salz; Kaliumchlorid; Natriumbromid; Ammoniumchlorid; Cäsiumformiat; Kaliumformiat; Natriumformiat; Natriumnitrat; Calciumbromid; Zinkbromid; Natriumchlorid; Salzsäure; Fluorwasserstoffsäure; Essigsäure; Ameisensäure; Citronensäure; Ethylendiamintetraessigsäure; Glycolsäure oder Sulfaminsäure.

5. Verfahren nach Anspruch 1, wobei die saure Behandlungsflüssigkeit in die Formation in einem Arbeitsgang eingebracht wird, der die Kalkentfernung, Drucksäuerung, Matrixsäuerung, Umleitung, Filterkuchenentfernung oder Pillenentfernung beinhaltet.

6. Verfahren nach Anspruch 1, wobei das Geliermittel in der sauren Behandlungsflüssigkeit in einer Menge von 1,2 kg/m³ (10 lb/mgal) bis 24 kg/m³ (200 lb/mgal) vorliegt.

7. Verfahren nach Anspruch 1, wobei das Geliermittel durch eine Vernetzungsreaktion, die ein Vernetzungsmittel umfasst, zumindest zum Teil vernetzt wird.

8. Verfahren nach Anspruch 1, wobei die saure Behandlungsflüssigkeit mindestens einen der folgenden Bestandteile umfasst: einen Hydratinhibitor; ein Korrosionsschutzmittel; ein Additiv zur pH-Wert-Regelung; ein Tensid; einen Brecher; ein Additiv zur Regelung des Flüssigkeitsverlusts; einen Kalkinhibitor; einen Asphalteninhibitor; einen Paraffininhibitor; einen Schaumbildner; einen Entschäumer; einen Emulgator; einen Demulgator; ein Eisenkontrollmittel; ein Lösungsmittel; ein gegenseitiges Lösungsmittel; einen Partikelumleiter; ein Gas; Kohlendioxid; Stickstoff; ein Biopolymer, bei dem es sich nicht um Scleroglucan oder Diutan handelt; ein synthetisches Polymer oder einen Reibungsminderer.

9. Verfahren nach Anspruch 1, wobei die saure Behandlungsflüssigkeit geschäumt wird und ein Gas in der Menge von 5 Vol.-% bis 95 Vol.-% umfasst.

10. Verfahren nach einem der Ansprüche 1, 4, 6 oder 8, das das Inkontaktbringen eines Teils der unterirdischen Formation mit der sauren Behandlungsflüssigkeit und das Wechselwirkenlassen der sauren Behandlungsflüssigkeit mit einer Komponente der unterirdischen Formation derart, dass die Komponente gelöst wird, umfasst.

11. Verfahren nach Anspruch 10, wobei die Säure Salzsäure umfasst.

12. Verfahren nach einem der Ansprüche 1, 2, 3, 4 oder 8, das weiterhin Folgendes umfasst: Produzieren von Kohlenwasserstoffen aus der Formation.

13. Verfahren nach Anspruch 10, wobei die saure Behandlungsflüssigkeit geschäumt wird.

14. Behandlungsflüssigkeit, die ein Geliermittel umfasst, das Diutan umfasst, wobei der pH-Wert der sauren Behandlungsflüssigkeit weniger als etwa 4 ist.

15. Behandlungsflüssigkeit nach Anspruch 14, wobei die saure Behandlungsflüssigkeit mindestens einen der folgenden Bestandteile umfasst: Süßwasser; Salzwasser; eine Salzlösung; ein Salz; Kaliumchlorid; Natriumbromid; Ammoniumchlorid; Cäsiumformiat;
Kaliumformiat; Natriumformiat; Natriumnitrat; Calciumbromid; Zinkbromid; Natriumchlorid; Salzsäure; Fluorwasserstoffsäure; Essigsäure; Ameisensäure; Citronensäure; Ethylendiamintetraessigsäure; Glycolsäure oder Sulfaminsäure.

16. Behandlungsflüssigkeit nach Anspruch 14, wobei das Geliermittel in der sauren Behandlungsflüssigkeit in einer Menge von 1,2 kg/m³ (10 lb/mgal) bis 24 kg/m³ (200 lb/mgal) vorliegt.

17. Behandlungsflüssigkeit nach Anspruch 14, wobei das Geliermittel durch eine Vernetzungsreaktion, die ein Vernetzungsmittel umfasst, zumindest zum Teil vernetzt wird.

18. Behandlungsflüssigkeit nach Anspruch 14, wobei das Vernetzungsmittel mindestens einen der folgenden Bestandteile umfasst: eine Verbindung auf Eisenbasis; eine Verbindung auf Titanbasis; eine Verbindung auf Zirconiumbasis; Eisenchlorid; Titanlactat; Titanmalat; Titancitrat; Zirconiumlactat; Zirconiumoxychlorid; Zirconiumhydroxychlorid; Zirconiumcitrat; einen Zirconiumkomplex von Hydroxyethylglycin; Ammoniumzirconiumfluorid; Zirconium-2-ethylhexanoat; Zirconiumacetat; Zirconiumneodecanoat; Zirconiumacetylacetonat; Tetrakis (triethanolamin) zirconium(IV); Zirconiumcarbonat; Ammoniumzirconiumcarbonat; Zirconylammoniumcarbonat; Zirconiumlactat; Titanacetylacetonat; Titanethylacetoacetat;
Titancitrat; Titan-Triethanolamin-Komplex; Ammoniumtitanlactat; Aluminiumcitrat; Chromcitrat; Chromacetat; Chrompropionat; Chrommalonat; Zirconiummalat; Ammonium; Natriumzirconiumlactat oder Zirconiumlactat in Kombination mit Isopropylamin oder Triethanolamin.

19. Behandlungsflüssigkeit nach Anspruch 14, wobei die saure Behandlungsflüssigkeit mindestens einen der folgenden Bestandteile umfasst: einen Hydratinhibitor; ein Korrosionsschutzmittel; ein Additiv zur pH-Wert-Regelung; ein Tensid; einen Brecher; ein Additiv zur Regelung des Flüssigkeitsverlusts; einen Kalkinhibitor; einen Asphalteninhibitor; einen Paraffininhibitor; einen Schaumbildner; einen Entschäumer; einen Emulgator; einen Demulgator; ein Eisenkontrollmittel; ein Lösungsmittel; ein gegenseitiges Lösungsmittel; einen Partikelumleiter; ein Gas; Kohlendioxid; Stickstoff; ein Biopolymer, bei dem es sich nicht um Scleroglucan oder Diutan handelt; ein synthetisches Polymer oder einen Reibungsminderer.

20. Behandlungsflüssigkeit nach Anspruch 14, wobei die saure Behandlungsflüssigkeit ein Gas in der Menge von 5 Vol.-% bis 95 Vol.-% umfasst.

21. Behandlungsflüssigkeit nach Anspruch 20, wobei die saure Behandlungsflüssigkeit mindestens einen der folgenden Bestandteile umfasst: ein Alkylamidobetain; Cocoamidopropylbetain; alpha-Olefinsulfonat; Trimethyltalgammoniumchlorid; ein C₈-bis C₂₂-Alkylethoxylatsulfat oder Trimethylcocoammoniumchlorid.

22. Behandlungsflüssigkeit nach Anspruch 14, wobei die saure Behandlungsflüssigkeit ein Korrosionsschutzmittel umfasst, das mindestens einen der folgenden Bestandteile umfasst: einen Acetylenalkohol; ein Mannich-Kondensationsprodukt; eine ungesättigte Carbonylverbindung; eine ungesättigte Etherverbindung; Formamid; Ameisensäure; ein Formiat; ein Carbonyl; ein Iodid; ein Terpen; einen aromatischen Kohlenwasserstoff; Kaffee; Tabak; Gelatine; Zimtaldehyd; ein Zimtaldehydderivat; einen Acetylenalkohol; ein fluoriertes Tensid; ein quaternäres Derivat einer heterocyclischen Stickstoffbase; ein quaternäres Derivat einer halogenmethylierten aromatischen Verbindung; Kupferiodid; Kupfer(I)-chlorid; eine Antimonverbindung; ein Antimonoxid; ein Antimonhalogenid; Antimontartrat; Antimoncitrat; ein Alkalimetallsalz eines Antimontartrats und eines Antimoncitrats; ein Alkalimetallsalz des Pyroantimonat-Typs und ein Antimonaddukt von Ethylenglycol; eine Bismutverbindung; ein Bismutoxid; ein Bismuthalogenid; ein Bismuttartrat; ein Bismutcitrat; ein Alkalimetallsalz von Bismuttartrat und Bismutcitrat oder Iod.

23. System zur Behandlung einer unterirdischen Bohrung, das eine saure Behandlungsflüssigkeit umfasst, die eine wässrige Basisflüssigkeit, eine Säure und ein Geliermittel umfasst, wobei das Geliermittel eine Bohrungsbehandlungsflüssigkeit nach einem der Ansprüche 14 bis 21 umfasst.

## Revendications

1. Procédé comprenant :
l'obtention d'un fluide de traitement acide qui comprend un agent gélifiant qui comprend un fluide à base aqueuse, un acide et un agent gélifiant qui comprend du diutane ; et
l'introduction du fluide de traitement acide dans une formation souterraine.

2. Procédé selon la revendication 1, dans lequel la formation souterraine comprend une température de trou de forage allant jusqu'à environ 260 °C (500 °F).

3. Procédé selon la revendication 1, dans lequel le pH du fluide de traitement acide est inférieur à environ 4.

4. Procédé selon la revendication 1, dans lequel le fluide de traitement acide comprend au moins l'un des composants suivants : de l'eau douce ; de l'eau salée ; une saumure ; un sel ; du chlorure de potassium ; du bromure de sodium ; du chlorure d'ammonium ; du formiate de césium ; du formiate de potassium ; du formiate de sodium ; du nitrate de sodium ; du bromure de calcium ; du bromure de zinc ; du chlorure de sodium ; de l'acide chlorhydrique ; de l'acide fluorhydrique ; de l'acide acétique ; de l'acide formique ; de l'acide citrique ; de l'acide éthylènediaminetétraacétique ; de l'acide glycolique ; ou de l'acide sulfamique.

5. Procédé selon la revendication 1, dans lequel le fluide de traitement acide est introduit dans la formation dans une opération comprenant le détartrage, l'acidification avec fracturation, l'acidification matricielle, le détournement, l'élimination de gâteau de filtration ou l'élimination de bouchon.

6. Procédé selon la revendication 1, dans lequel l'agent gélifiant est présent dans le fluide de traitement acide en une quantité de 1,2 kg/m³ (10 lb/Mgal) à 24 kg/m³ (200 lb/Mgal).

7. Procédé selon la revendication 1, dans lequel l'agent gélifiant est au moins partiellement réticulé au moyen d'une réaction de réticulation qui met en jeu un agent de réticulation.

8. Procédé selon la revendication 1, dans lequel le fluide de traitement acide comprend au moins l'un des composants suivants : un inhibiteur d'hydrates ; un inhibiteur de corrosion ; un additif d'ajustement du pH ; un tensioactif ; un rupteur d'émulsion ; un additif de lutte contre la perte de fluide ; un antitartre ; un inhibiteur d'asphaltènes ; un inhibiteur de paraffines ; un agent moussant ; un antimousse ; un émulsifiant ; un désémulsifiant ; un agent d'ajustement du fer ; un solvant ; un solvant mutuel ; un agent de détournement particulaire ; un gaz ; du dioxyde de carbone ; de l'azote ; un biopolymère autre que le scléroglucane ou le diutane ;
un polymère synthétique ; ou un agent réduisant le frottement.

9. Procédé selon la revendication 1, dans lequel le fluide de traitement acide est moussé et comprend un gaz en quantité de 5 % à 95 % en volume.

10. Procédé selon l'une quelconque des revendications 1, 4, 6 ou 8, comprenant la mise en contact d'une partie de la formation souterraine avec le fluide de traitement acide ; et le fait de laisser le fluide de traitement acide interagir avec un composant de la formation souterraine de façon à ce que le composant soit dissous.

11. Procédé selon la revendication 10, dans lequel l'acide comprend de l'acide chlorhydrique.

12. Procédé selon l'une quelconque des revendications 1, 2, 3, 4 ou 8, comprenant en outre : la production d'hydrocarbures à partir de la formation.

13. Procédé selon la revendication 10, dans lequel le fluide de traitement acide est moussé.

14. Fluide de traitement comprenant un agent gélifiant qui comprend du diutane, le pH du fluide de traitement acide étant inférieur à environ 4.

15. Fluide de traitement selon la revendication 14, le fluide de traitement acide comprenant au moins l'un des composants suivants : de l'eau douce ; de l'eau salée ; une saumure ; un sel ; du chlorure de potassium ; du bromure de sodium ; du chlorure d'ammonium ; du formiate de césium ; du formiate de potassium ; du formiate de sodium ; du nitrate de sodium ; du bromure de calcium ; du bromure de zinc ; du chlorure de sodium ; de l'acide chlorhydrique ; de l'acide fluorhydrique ; de l'acide acétique ; de l'acide formique ; de l'acide citrique ; de l'acide éthylènediaminetétraacétique ; de l'acide glycolique ; ou de l'acide sulfamique.

16. Fluide de traitement selon la revendication 14, l'agent gélifiant étant présent dans le fluide de traitement acide en une quantité de 1,2 kg/m³ (10 lb/Mgal) à 24 kg/m³ (200 lb/Mgal).

17. Fluide de traitement selon la revendication 14, dans lequel l'agent gélifiant est au moins partiellement réticulé au moyen d'une réaction de réticulation qui met en jeu un agent de réticulation.

18. Fluide de traitement selon la revendication 14, dans lequel l'agent de réticulation comprend au moins l'un des composants suivants : un composé à base de fer ; un composé à base de titane ; un composé à base de zirconium ; du chlorure ferrique ; du lactate de titane ; du malate de titane ; du citrate de titane ; du lactate de zirconium ; de l'oxychlorure de zirconium ; de l'hydroxychlorure de zirconium ; du citrate de zirconium ; un complexe de zirconium et d'hydroxyéthylglycine ; du fluorure d'ammonium et de zirconium ; du 2-éthylhexanoate de zirconium ; de l'acétate de zirconium ; du néodécanoate de zirconium ; de l'acétylacétonate de zirconium ; du tétrakis(triéthanolaminato)zirconium(IV) ; du carbonate de zirconium ; du carbonate d'ammonium et de zirconium ; du carbonate de zirconyle et d'ammonium ; du lactate de zirconium ; de l'acétylacétonate de titane ; de l'éthylacétoacétate de titane ; du citrate de titane ; un complexe de triéthanolamine et de titane ; du lactate d'ammonium et de titane ; du citrate d'aluminium ; du citrate de chrome ; de l'acétate de chrome ; du propionate de chrome ; du malonate de chrome ; du malate de zirconium ; de l'ammonium ; du lactate de sodium et de zirconium ; ou du lactate de zirconium en association avec de l'isopropylamine ou de la triéthanolamine.

19. Fluide de traitement selon la revendication 14, le fluide de traitement acide comprenant au moins l'un des composants suivants : un inhibiteur d'hydrates ; un inhibiteur de corrosion ; un additif d'ajustement du pH ; un tensioactif ; un rupteur d'émulsion ; un additif de lutte contre la perte de fluide ; un antitartre ; un inhibiteur d'asphaltènes ; un inhibiteur de paraffines ; un agent moussant ; un antimousse ; un émulsifiant ; un désémulsifiant ; un agent d'ajustement du fer ; un solvant ; un solvant mutuel ; un agent de détournement particulaire ; un gaz ; du dioxyde de carbone ; de l'azote ; un biopolymère autre que le scléroglucane ou le diutane ;
un polymère synthétique ; ou un agent réduisant le frottement.

20. Fluide de traitement selon la revendication 14, le fluide de traitement acide comprenant un gaz en quantité de 5 % à 95 % en volume.

21. Fluide de traitement selon la revendication 20, le fluide de traitement acide comprenant au moins l'un des composants suivants : une alkylamidobétaïne ; une cocoamidopropylbétaïne ; un alpha-oléfinesulfonate ; du chlorure de triméthylsuifammonium ; un (produit d'éthoxylation d'alkyle en C₈ à C₂₂) sulfate ; ou du chlorure de triméthylcocoammonium.

22. Fluide de traitement selon la revendication 14, le fluide de traitement acide comprenant un inhibiteur de corrosion qui comprend au moins l'un des composants suivants : un alcool acétylénique ; un produit de condensation de Mannich ; un composé carbonyle insaturé ; un composé éther insaturé ; du formamide ; de l'acide formique ; un formiate ; un carbonyle ; un iodure ; un terpène ; un hydrocarbure aromatique ; du café ; du tabac ; de la gélatine ; du cinnamaldéhyde ; un dérivé du cinnamaldéhyde ; un alcool acétylénique ; un tensioactif fluoré ; un dérivé quaternaire de base azotée hétérocyclique ; un dérivé quaternaire d'un composé aromatique halométhylé ; de l'iodure de cuivre(I) ; du chlorure de cuivre(I) ; un composé de l'antimoine ; un oxyde d'antimoine ; un halogénure d'antimoine ; du tartrate d'antimoine ; du citrate d'antimoine ; un sel de métal alcalin d'un tartrate d'antimoine et citrate d'antimoine ; un sel de métal alcalin de type pyroantimoniate et un produit d'addition d'antimoine d'éthylèneglycol ; un composé du bismuth ; un oxyde de bismuth ; un halogénure de bismuth ; un tartrate de bismuth ; un citrate de bismuth ; un sel de métal alcalin de tartrate de bismuth et de citrate de bismuth ; ou de l'iode.

23. Système de traitement de puits souterrain comprenant un fluide de traitement acide qui comprend un fluide à base aqueuse, un acide et un agent gélifiant, dans lequel l'agent gélifiant comprend un fluide de traitement de puits selon l'une quelconque des revendications 14 à 21.
